# EUROPÄISCHE PATENTSCHRIFT

(11) **EP 1 437 246 B1**
(45) Veröffentlichungstag und Bekanntmachung des Hinweises auf die Patenterteilung: **16.03.2005**
(21) Anmeldenummer: 03024324.0
(22) Anmeldetag: 24.10.2003
(51) Int. Cl.: B60H 1/34, B60H 1/00

(54) **Luftleitvorrichtung für den Innenraum von Fahrzeugen**
Air conducting device for a vehicle interior
Dispositif de guidage d'air pour l'habitacle d'un véhicule

(30) Priorität: 13.11.2002 DE 20217506 U
(43) Veröffentlichungstag der Anmeldung: 14.07.2004
(73) Patentinhaber: REUM GmbH & Co. Betriebs KG, 74736 Hardheim (DE)
(72) Erfinder: Müller, Robert, 74722 Buchen (DE)
(74) Vertreter: Maser, Jochen, Dipl.-Ing.

(56) Entgegenhaltungen:
- EP-A- 1 132 226
- EP-A- 1 151 879
- WO-A-02/04239
- DE-C- 19 508 983
- DE-C- 19 703 516

## Beschreibung

### TECHNISCHES GEBIET

Die vorliegende Erfindung betrifft eine Luftleitvorrichtung für den Innenraum von Fahrzeugen mit einem Aggregat zum Erzeugen einer Strömung von Luft, insbesondere erwärmter und/oder gekühlter Luft, einer ersten Luftleiteinrichtung, aus der die Luft großflächig diffus austreten kann, zumindest einer weiteren Luftleiteinrichtung aus der die Luft zielgerichtet austreten kann, und einer Steuereinrichtung zum Einstellen der Stärke und Temperatur der austretenden Luft. Die Steuereinrichtung könnte ein zusätzliches Unlenken der Luftleiteinrichtung ermöglichen.

### STAND DER TECHNIK

Für den Innenraum von Fahrzeugen sind diffuse Belüftungen bekannt. So wird beispielsweise auf einer Instrumententafeloberfläche im Ausströmbereich der Luftleiteinrichtung relativ großflächig eine perforierte Austrittseinheit angeordnet, die eine diffuse Belüftung garantiert. Eine derartige Luftleitvorrichtung ist zum Beispiel aus EP 1151879 bekannt. Die diffuse Belüftung steigert das Komfortgefühl der Insassen da keine direkte Luftanströmung erfolgt. Allerdings besteht die Gefahr von Kondenswasserbildung auf der Oberfläche des Ausströmbereiches der diffusen Belüftung, speziell bei metallischen Oberflächen.

### DARSTELLUNG DER ERFINDUNG

Der vorliegenden Erfindung liegt die Aufgabe beziehungsweise das technische Problem zugrunde, eine Luftleitvorrichtung der eingangs genannten Art anzugeben, bei der eine Kondenswasserbildung zuverlässig verhindert werden kann.

Die erfindungsgemäße Luftleitvorrichtung ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Luftleitvorrichtung zeichnet sich demgemäß dadurch aus, dass in unmittelbarer Nähe des Ausströmbereiches der ersten Luftleiteinrichtung zumindest ein Sensor für den Feuchtegehalt angeordnet ist, eine Auswerteinheit vorhanden ist, die die Signale des Sensors auswertet und bei Überschreiten eines vorgebbaren Feuchtegehalts eine Stelleinrichtung beaufschlagt, die die Luftausströmung aus der ersten Luftleiteinrichtung abschaltet und eine Luftausströmung aus der weiteren Luftleiteinrichtung veranlasst und/oder ein Aggregat zum Entfeuchten aktiviert.

Der Ausströmbereich der weiteren Luftleiteinrichtung kann beispielsweise als Defrosterdüse oder Personenanströmdüse ausgebildet sein.

Eine besonders bevorzugte Ausgestaltung zeichnet sich dadurch aus, dass der Sensor die Temperatur im Ausströmbereich der ersten Luftleiteinrichtung innenseitig und außenseitig misst und der Sensor oder die Auswerteinheit den Feuchtegehalt nach der Temperaturdifferenzmethode berechnet.

Eine besonders vorteilhafte Weiterbildung, die eine sehr gute diffuse Belüftung gewährleistet zeichnet sich dadurch aus, dass im Ausströmbereich der ersten Luftleiteinrichtung eine perforierte Oberfläche vorhanden ist.

Bei der erfindungsgemäßen Luftleitvorrichtung ist einerseits der Einsatz einer komfortablen Komfortbelüftung gewährleistet. Die Nachteile einer möglichen Kondenswasserbildung im Oberflächenbereich der diffusen Ausströmung wird durch das Vorsehen zumindest eines Sensors zuverlässig eliminiert.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbiidungen derselben werden im Folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Ansicht eines Armaturenbrettes eines Fahrzeuges mit einer diffusen Luftleiteinrichtung und weiteren gerichteten Luftleiteinrichtungen mit Anordnung eines Sensors im Bereich der Ausströmung der ersten diffusen Luftleiteinrichtung und
- Fig. 2: ein schematischer Schnitt durch das Armaturenbrett gemäß Schnittführung A-A in Fig. 1.

### WEGE ZUM AUSFÜHREN DER ERFINDUNG

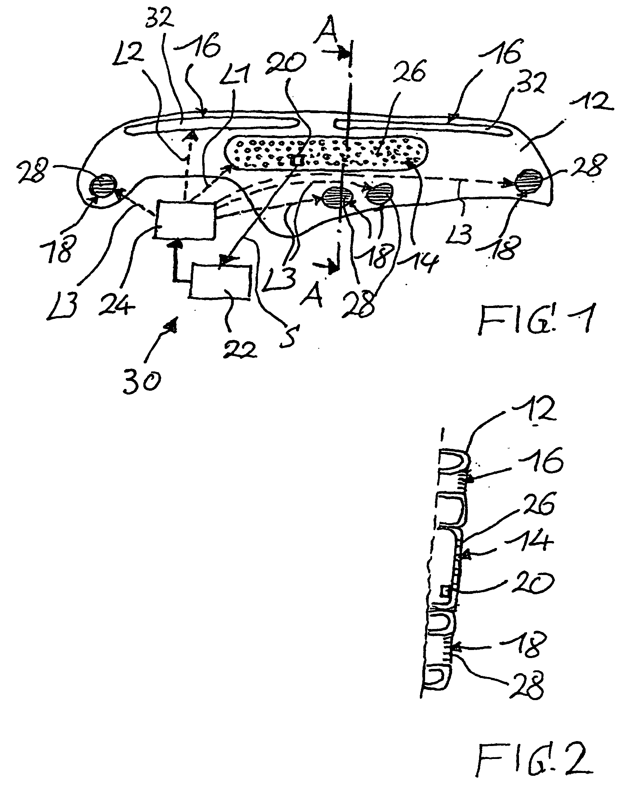

In Fig. 1 ist stark schematisiert ein Armaturenbrett 16 beziehungsweise eine Instrumententafel eines Fahrzeuges dargestellt, das die über eine nicht näher dargestellte Luftleitvorrichtung 30 mit ausströmender Luft beaufschlagbar ist, wobei die Menge und Temperatur der ausströmenden Luft von den Insassen eingestellt werden kann.

Es ist eine erste nicht näher dargestellte Luftleiteinrichtung 14 vorhanden, die im Ausströmbereich im Wesentlichen in der Mitte des Armaturenbretts 16 eine diffuse Ausströmoberfläche aufweist, wobei dieser Ausströmbereich als perforierte Platteneinheit 26 ausgebildet ist. Im oberen Randbereich des Armaturenbretts sind zwei schlitzartige Defrosterdüsen 32 angeordnet, die den Ausströmbereich einer nicht näher dargestellten zweiten Luftleiteinrichtung 16 bilden. Schließlich sind im unteren Randbereich jeweils auf der linken Seite und der rechten Seite des Armaturenbretts 12 und im Wesentlichen in der Mitte der Personenanströmdüsen, die jeweils als verstellbare Lamelleneinheit 28 ausgebildet sind, vorhanden, die den Ausströmbereich einer nicht näher dargestellten dritten Luftleiteinrichtung 18 bilden.

Unmittelbar im Ausströmbereich der ersten diffusen Luftleiteinrichtung 14 ist auf der Innenseite der Platteneinheit 26 ein Feuchtesensor 20 angeordnet. Der Feuchtesensor 20 gibt seine gemessenen Signale an eine in Fig. 1 schematisch dargestellte Auswerteinrichtung 22 ab (Pfeil S). Sobald ein vorgegebener Feuchtegehalt-Höchstwert überschritten ist, beaufschlagt die Auswerteinrichtung 22 eine in Fig. 1 schematisch dargestellte Stelleinrichtung 24, mittels derer die Luftströmung in der ersten, zweiten, dritten Luftleiteinrichtung 14, 16, 18 beeinflussbar ist (schematisch dargestellte Pfeile L1, L2 und L3).

Wird nun der vorgegebene Feuchtehöchstgehalt überschritten, veranlasst die Stelleinrichtung 24, dass das Ausströmen der Luft aus der ersten diffusen Luftleiteinrichtung 14 abgeschaltet wird und die Luftausführung auf die zweite und/oder dritte Luftleiteinrichtung 16, 18 umgestellt wird. Durch diese Maßnahme wird zuverlässig verhindert, dass sich auf der Oberfläche der perforierten Platteneinheit 26 Kondenswasser bildet, was insbesondere bei metallischen Oberflächen von hoher Relevanz ist.

Es ist auch möglich, dass die Stelleinrichtung 24 bei Beaufschlagung durch die Auswerteinrichtung 22 ein Entfeuchtungsaggregat aktiviert. Diese Aktivierung kann auch parallel zu der Umstellung der Luftströmung auf die zweite und dritte Luftleiteinrichtung 16, 18 erfolgen.

In den Fig. 1 und 2 ist ein Ausführungsbeispiel einer Luftleitvorrichtung mit einem Feuchtesensor dargestellt. Die Geometrie und Anordnung der einzelnen Luftführungseinrichtungen kann in unterschiedlichster Art gestaltet sein. Es kann auch ein Temperatursensor eingesetzt werden, wobei die Auswertung nach der Temperaturdifferenzmethode erfolgt, das heißt bei Überschreiten einer vorgegebener Differenz zwischen Innen- und Außenseite die Stelleinrichtung beaufschlagt wird.

## Patentansprüche

1. Luftleitvorrichtung (30) für den Innenraum von Fahrzeuger mit
- einem Aggregat zum Erzeugen einer Strömung von Luft, insbesondere erwärmter und/oder gekühlter Luft,
- einer ersten Luftleiteinrichtung (14), aus der die Luft großflächig diffus austreten kann,
- zumindest einer weiteren Luftleiteinrichtung (16; 18) aus der die Luft zielgerichtet austreten kann, und
- einer Steuereinrichtung zum Einstellen der Stärke und Temperatur der austretenden Luft,
**dadurch gekennzeichnet, dass**
- in unmittelbarer Nähe des Ausströmbereiches der ersten Luftleiteinrichtung (14) zumindest ein Sensor (20) für den Feuchtegehalt angeordnet ist,
- eine Auswerteinheit (22) vorhanden ist, die die Signale des Sensors (20) auswertet und bei Überschreiten eines vorgehbaren Feuchtegehalts eine Stelleinrichtung (24) beaufschlagt, die
-- die Luftausströmung aus der ersten Luftleiteinrichtung (14) abschaltet und eine Luftausströmung aus zumindest der weiteren Luftleiteinrichtung (16; 18) veranlasst und/oder
-- ein Aggregat zum Entfeuchten aktiviert.

2. Luftleitvorrichtung nach Anspruch 1,
**dadurch gekennzeichnet, dass**
- die weitere Luftleiteinrichtung (16) im Ausströmbereich als Defrosterdüse (32) ausgebildet ist.

3. Luftleitvorrichtung nach Anspruch 1,
**dadurch gekennzeichnet, dass**
- die weitere Luftleiteinrichtung (18) im Ausströmbereich als Personenanströmdüse ausgebildet ist.

4. Luftleitvorrichtung nach einem oder mehreren der vorstehenden Ansprüche,
**dadurch gekennzeichnet, dass**
- der Sensor (20) die Temperatur im Ausströmbereich der ersten Luftleiteinrichtung (14) innenseitig und außenseitig misst und der Sensor (20) oder die Auswerteinheit den Feuchtegehalt nach der Temperaturdifferenzmethode berechnet.

5. Luftleitvorrichtung nach einem oder mehreren der vorstehenden Ansprüche,
**dadurch gekennzeichnet, dass**
- die erste Luftleiteinrichtung (14) im Ausströmbereich eine perforierte Platteneinheit (26) aufweist.

6. Luftleitvorrichtung nach einem oder mehreren der vorstehenden Ansprüche,
**dadurch gekennzeichnet, dass**
- im Ausströmbereich der ersten Luftleiteinrichtung (14) mehrere Sensoren (20) beabstandet angeordnet sind.

7. Luftleitvorrichtung nach Anspruch 3,
**dadurch gekennzeichnet, dass**
- die weitere Luftleiteinrichtung (18) im Ausströmbereich eine verstellbare Lamelleneinheit (28) aufweist.

## Claims

1. Air conducting device (30) for the interior of vehicles, having
- a unit for generating a current of air, in particular warmed and/or cooled air,
- a first air conducting device (14), from which the air can emerge diffusely over a large area,
- at least one further air conducting device (16; 18) from which the air can emerge directed towards a target, and
- a control device for adjusting the strength and temperature of the emerging air,
**characterized in that**
- at least one moisture content sensor (20) is arranged in immediate proximity to the outlet area of the first air conducting device (14),
- an analysing unit (22) is provided, which analyses the signals from the sensor (20) and which if a predetermined moisture content is exceeded actuates an adjusting device (24), which
- shuts off the outlet air flow from the first air conducting device (14) and produces an air outlet flow from at least the other air conducting device (16; 18) and/or
- activates a dehumidifier unit.

2. Air conducting device according to Claim 1 **characterized in that** the further air conducting device (16) in the outlet area is designed as defroster jet (32).

3. Air conducting device according to Claim 1 **characterized in that** the further air conducting device (18) in the outlet area is designed as passenger-directed jet.

4. Air conducting device according to any one or more of the preceding Claims, **characterized in that** the sensor (20) measures the temperature in the outlet area of the first air conducting device (14) inside and out and the sensor (20) or the analysing unit calculates the moisture content by the temperature differential method.

5. Air conducting device according to any one or more of the preceding Claims, **characterized in that** the first air conducting device (14) in the outlet area has a perforated plate unit (26).

6. Air conducting device according to any one or more of the preceding Claims, **characterized in that** multiple sensors (20) are arranged at spaced intervals in the outlet area of the first air conducting device (14).

7. Air conducting device according to Claim 3 **characterized in that** the further air conducting device (18) in the outlet area has an adjustable vane unit (28).

## Revendications

1. Dispositif de guidage d'air pour l'habitacle de véhicules, comprenant :
- un ensemble de production d'un courant d'air, notamment d'air chauffé et/ou refroidi,
- un premier dispositif de guidage d'air (14), duquel l'air peut sortir de manière diffuse sur une grande surface,
- au moins un dispositif de guidage d'air supplémentaire (16 ; 18) duquel l'air peut sortir de manière ciblée, et
- un dispositif de commande pour ajuster l'intensité et la température de l'air sortant,
**caractérisé en ce que**
- l'on dispose à proximité immédiate de la région de l'écoulement de sortie du premier dispositif de guidage d'air (14) au moins un capteur (20) pour le taux d'humidité,
- l'on prévoit une unité d'analyse (22) qui analyse les signaux du capteur (20) et qui, en cas de dépassement d'un taux d'humidité prédéfinissable, sollicite un dispositif de réglage (24)
- qui coupe l'écoulement de sortie d'air du premier dispositif de guidage d'air (14) et qui provoque un écoulement de sortie d'air d'au moins le dispositif de guidage d'air supplémentaire (16 ; 18) et/ou
- qui active un ensemble de déshumidification.

2. Dispositif de guidage d'air selon la revendication 1,
**caractérisé en ce que**
- le dispositif de guidage d'air supplémentaire (16) est réalisé dans la région de l'écoulement de sortie sous forme d'une buse de dégivrage (32).

3. Dispositif de guidage d'air selon la revendication 1,
**caractérisé en ce que**
- le dispositif de guidage d'air supplémentaire (18) est réalisé dans la région de l'écoulement de sortie sous forme d'une buse de ventilation pour occupants.

4. Dispositif de guidage d'air selon l'une quelconque ou plusieurs des revendications précédentes,
**caractérisé en ce que**
- le capteur (20) mesure la température dans la région de l'écoulement de sortie du premier dispositif de guidage d'air (14) du côté interne et du côté externe et le capteur (20) ou l'unité d'analyse calcule le taux d'humidité selon la méthode de la différence de température.

5. Dispositif de guidage d'air selon l'une quelconque ou plusieurs des revendications précédentes,
**caractérisé en ce que**
- le premier dispositif de guidage d'air (14) présente, dans la région de l'écoulement de sortie, une unité à plaque perforée (26).

6. Dispositif de guidage d'air selon l'une quelconque ou plusieurs des revendications précédentes,
**caractérisé en ce que**
- dans la région de l'écoulement de sortie du premier dispositif de guidage d'air (14), on dispose plusieurs capteurs (20) espacés les uns des autres.

7. Dispositif de guidage d'air selon la revendication 3,
**caractérisé en ce que**
- le dispositif de guidage d'air supplémentaire (18) présente dans la région de l'écoulement de sortie une unité à lamelles réglable (28).
